(19) Europäisches Patentamt
European Patent Office
Office européen des brevets

(11) **EP 1 107 465 B1**

(12) **EUROPÄISCHE PATENTSCHRIFT**

(45) Veröffentlichungstag und Bekanntmachung des Hinweises auf die Patenterteilung:
**04.08.2010 Patentblatt 2010/31**

(51) Int Cl.:
***H04B 1/707*** *(2006.01)*

(21) Anmeldenummer: **00123593.6**

(22) Anmeldetag: **28.10.2000**

(54) **Verfahren und Funkstation zur Spreizspektrumübertragung zwischen mehreren Funkstationen**

Method and radio station for spread spectrum communication between multiple radio stations

Procédé et station radio pour communication radio à spectre étalé entre des stations radio

(84) Benannte Vertragsstaaten:
**DE FR GB IT**

(30) Priorität: **30.11.1999 DE 19957547**

(43) Veröffentlichungstag der Anmeldung:
**13.06.2001 Patentblatt 2001/24**

(73) Patentinhaber: **IPCom GmbH & Co. KG**
**82049 Pullach (DE)**

(72) Erfinder: **Kowalewski, Frank**
**38228 Salzgitter (DE)**

(74) Vertreter: **Schneider, Günther Martin et al**
**Bettinger Schneider Schramm**
**Patent- und Rechtsanwälte**
**Postfach 86 02 67**
**81629 München (DE)**

(56) Entgegenhaltungen:
- **WON MEE JANG ET AL: "Joint transmitter-receiver optimization in synchronous multiuser communications over multipath channels" IEEE TRANSACTIONS ON COMMUNICATIONS IEEE USA, Bd. 46, Nr. 2, 1. Februar 1998 (1998-02-01), Seiten 269-278, XP002301227 ISSN: 0090-6778**
- **JAEYOUNG KWAK ET AL: "Blind adaptive space-time receiving and transmitting diversities for multiuser DS-CDMA systems" MILITARY COMMUNICATIONS CONFERENCE PROCEEDINGS, 1999. MILCOM 1999. IEEE ATLANTIC CITY, NJ, USA 31 OCT.-3 NOV. 1999, PISCATAWAY, NJ, USA,IEEE, US, 31. Oktober 1999 (1999-10-31), Seiten 924-928, XP010369796 ISBN: 0-7803-5538-5**
- **VOJCIC ET AL: "Transmitter precoding in synchronous multiuser communications" IEEE TRANSACTIONS ON COMMUNICATIONS, IEEE INC. NEW YORK, US, Bd. 46, Nr. 10, Oktober 1998 (1998-10), Seiten 1346-1355, XP002190127 ISSN: 0090-6778**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die Erfindung geht aus von einem Verfahren zur Übertragung von Funksignalen zwischen mehreren Funkstationen über Funkkanäle mittels Codespreizung beziehungsweise einem System von Funkstationen, wobei jede Funkstation ausgestaltet ist, Funksignale über Funkkanäle mittels Codespreizung nach der Gattung der unabhängigen Patentansprüche, zu senden und empfangen.

Es ist bereits aus R. Esmailzadeh und M. Nakagawa: "Pre-Rake Diversity Combination for Direct Sequence Spread Spectrum Mobile Communications Systems" IEICE Trans. Comm., BD. E76-B (1993). Seite 1008 bis 1015, bekannt, daß die durch Mehrwegeübertragung hervorgerufene intersymbolinterferenz bereits im Sender durch Pre-Rake-Kombination verringert werden kann. Dafür müssen die Übertragungseigenschaften des Funkkanals dem Sender bekannt sein. Dabei bleibt die Mehrfachnutzerinterferenz unberücksichtigt.

Des Weiteren ist aus Won Mee et al., Joint Transmitter-Receiver Optimization in Synchronous Multiuser Communications over Multipath Channels", IEEE Trans. On Communications IEEE USA, Bd. 46, Nr. 2. 1. Februar 1998 (1998-02-01), Seiten 269-278, XP002301227 ISSN: 0090-6778, bekannt, dass das Systemdesign für die Downlink-Übertragung auf der gemeinsamen Optimierung des Senders sowie des Empfängers in einem synchronisierten Mehrfachnutzerkanal beruht, welcher durch die Mehrwegausbreitung gekennzeichnet ist.

Aus Jaeyoung Kwak et al., "Blind Adaptive Space-Time Receiving and Transmitting Diversities for Multiuser DS-CDMA Systems", Military Communications Conf. Proc., 1999, MILCOM 1999, IEEE Atlantic City, NJ, USA, Oct. 31-Nov. 3, 1999, Piscataway, NJ, USA IEEE. US, Oct. 31, 1999, pp 924-928, XP010369796, ist bekannt, dass Kanalvorentzerrung sowie Voreliminierung in der Basisstation bei der Downlink-Übertragung d. h. in der sendenden Funkstation, vorgenommen werden.

G J R Povey, "Time Division Duplex - Code Division Multiple Access for Mobile Multimedia Services"". Proc. Of the 8th IEEE Intl. Symposium Personal, Indoor and Mobile Radio Communications, 1997 - Waves of the Year 2000, PIMRC '97, Helsinki, Finland, 1-4 Sept. 1997. New York, NY, USA, IEEE, US, ISBN 0-7803-3871-5, Seiten 1034-1037, offenbart ein Verfahren, in dem eine "Pre-Rake"-Prädiktion beim Sender in der Basisstation so vorgenommen wird dass ein aufwendiger Rake-Empfänger beim Empfänger in der Mobilstation erspart wird. Dadurch ist die Komplexität der Mobilstation erheblich reduziert. Dabei bleibt die Mehrfachnutzerinterferenz unberücksichtigt.

In R. Esmailzadeh et al., "Prerake Diversity Combining in Time-Division Duplex CDMA Mobile Communications", IEEE TRANSACTIONS on VEHICULAR TECHNOLOGY, IEEE SERVICE CENTER; PISCATAWAY, NJ, US, Bd. 48, Nr. 3, 1. Mai 1999, ISSN 0018-9545, Seiten 795-801) ist ein Verfahren bekannt, dass eine "Pre-Rake"-Technlk beim Sender in der Basisstation eingesetzt wird. Dies hat zur Folge, dass ein konventionaler Empfänger in der Mobilstation benötigt wird. Dabei kann eine vergleichbare Wirkung wie ein Rake-Empfänger erzielt werden, wenn orthogonale Einspreizungscodes verwendet werden.

Vorteile der Erfindung

Das erfindungsgemäße Verfahren beziehungsweise das erfindungsgemäße System von Funkstationen mit den Merkmalen der unabhängigen Ansprüche hat demgegenüber den Vorteil, daß die Funksignale besser detektiert werden.

Es ist vorteilhafterweise durch die Aufteilung der Eliminierung der Intersymbolinterferenz im Sender und der Eliminierung der Mehrfachnutzerinterferenz im Empfänger eine geringere Komplexität erreicht worden, wodurch die Funkstationen einfacher und billiger herzustellen sind.

Weiterhin ist von Vorteil, daß die Matrix zur Eliminierung der Mehrfachnutzerinterferenz nur neu berechnet werden muß, wenn eine Funkstation in eine betroffene Funkzelle hinzukommt oder die Funkzelle verläßt. Die Matrix muß nicht allein bei Änderung des Funkkanals neu berechnet werden. Dadurch wird der Rechenaufwand zur Berechnung der Matrix erheblich reduziert, wodurch Rechenkapazität für andere Aufgaben frei wird.

Darüber hinaus ist es von Vorteil, daß bei der Erfindung nur der Sender die Übertragungseigenschaften des Funkkanals zum jeweiligen Empfänger kennt, während der Empfänger selbst keine vollständigen Informationen über die Übertragungseigenschaften des Funkkanals benötigt. Dies hat den Vorteil der reduzierten Komplexität des Empfängers. Der Empfänger eliminiert Mehrfachnutzerinterferenzen, ohne dabei die vollständigen Übertragungseigenschaften des Funkkanals zu berücksichtigen.

Durch die in den abhängigen Ansprüchen aufgeführten Maßnahmen sind vorteilhafte Weiterbildungen und Verbesserungen der in den unabhängigen Ansprüche angegebenen Verfahren beziehungsweise Funkstation möglich.

Für die Bestimmung der Übertragungseigenschaften des Funkkanals ist es von Vorteil, daß die Funksignale Referenz- und Nutzdatensignale aufweisen, wobei die Referenzsignale ohne Vorentzerrung gesendet werden, so daß aus den empfangenen Referenzsignalen in der empfangenden Funkstation die Übertragungseigenschaften des jeweiligen Funkkanals bestimmt werden, um damit die von dieser Funkstation zu sendenden Funksignale wieder vorzuentzerren.

In einer vorteilhaften Ausgestaltung der Erfindung benutzt eine Funkstation andere Funkstationen als Relaisstationen, um Funksignale zu einer weiteren Funkstation zu übertragen. Dies hat beispielsweise in einem Mobilfunksystem den Vorteil, daß die erforderliche Sendeleistung der Mobilstationen erheblich geringer sein kann, womit die Mobilstationen sowohl kleiner als auch billiger hergestellt werden können.

Zeichnung

Ausführungsbeispiele der Erfindung sind in der Zeichnung dargestellt und in der nachfolgenden Beschreibung näher erläutert. Es zeigen Figur 1 ein Funkübertragungssystem, Figur 2 eine Funkzelle mit einer Basisstation und mehreren Mobilstationen und Figur 3 den schematischen Aufbau einer Funkstation.

Beschreibung der Ausführungsbeispiele

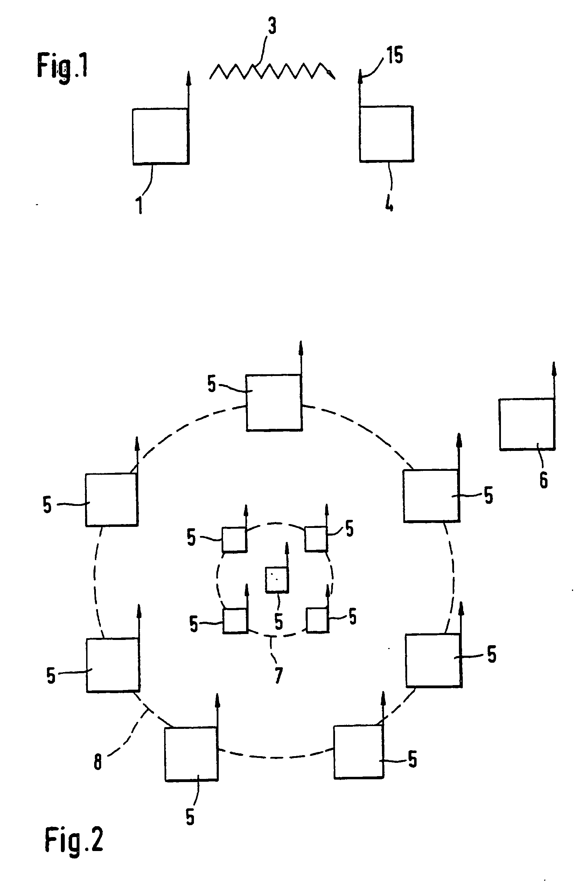

In Figur 1 ist eine sendende Funkstation 1 über eine angeschlossene Antenne 2 und einen Funkkanal 3 mit einem Empfänger 4 über eine an den Empfänger 4 angeschlossene Antenne 15 verbunden. Der Sender 1 strahlt über die Antenne 2 codegespreizte Funksignale über den Funkkanal 3 ab. Der Empfänger 4 empfängt diese gespreizten Funksignale mit seiner Antenne 15. Dabei wird der sogenannte Zeitmultiplex für einen Duplexbetrieb verwendet (Time Division Duplex), d.h. es wird in einem Frequenzbereich sowohl von der Funkstation 1 als auch von dem Empfänger 4 gesendet und empfangen, wobei einzelne Zeitperioden für die Funkstation 1 zum Senden zur Verfügung gestellt werden und andere für den Empfänger 4, wenn der Empfänger 4 die Rolle des Senders übernimmt.

Aufgrund von Gebäuden, der Landschaft und Fahrzeugen werden die Funksignale an diesen örtlichen Gegebenheiten reflektiert und gestreut, so daß sich mehrere Wege für das Funksignal vom Sender 1 zum Empfänger 4 ergeben. Dieses Phänomen wird durch Mehrwegeausbreitung beschrieben und führt dazu, daß unterschiedliche Teile des Funksignals eines Senders mit unterschiedlichen Verzögerungszeiten am Empfänger 4 ankommen, so daß sich die Funksignale des einen Senders am Empfänger überlagern, und es damit zur sogenannten Intersymbolinterferenz kommt. Ein gesendeter Impuls wird dadurch mehrfach nacheinander empfangen. Darüber hinaus sind die Phasenlagen der einzelnen Funksignale durch zum Beispiel unterschiedliche Längen der Ausbreitungspfade verschieden. Man bezeichnet dies auch mit Phasenverzerrungen.

Die Funksignale werden in Abhängigkeit von dem Weg, den sie vom Sender zum Empfänger zurücklegen, unterschiedlich gedämpft. Die Dämpfung, die Verzögerungszeiten und die Phasenverzerrungen bestimmen zusammen die Übertragungseigenschaften eines Funkkanals. Sie können auch nur zusammen kompensiert werden. Eine getrennte Kompensation der Dämpfung, der Verzögerungszeiten und der Phasenverzerrungen ist nicht möglich, weil ein Funksignal durch die Überlagerung dieser Effekte verändert wird. Zum Beispiel nimmt auf den Signalpegel nicht nur die Dämpfung Einfluß, sondern auch die Überlagerung von auf verschiedenen Ausbreitungswegen zum Empfänger gelangten Signalen. Daher bedeutet eine Entzerrung des Funksignals, daß die gesamten Übertragungseigenschaften des Funkkanals zusammen in einem Schritt ausgeglichen werden.

Da mit unterschiedlichen Codes gespreizte Funksignale unterschiedlicher Sender auf den gleichen Frequenzen übertragen werden, kann es zu Querbeeinflussungen dieser Funksignale untereinander kommen. Diese Störung wird Mehrfachnutzerinterferenz genannt. Codespreizung ist eine Modulationsart, bei der ein schmalbandiges Signal mittels eines Codes zu einem breitbandigen Signal gespreizt wird. Jeder Sender verwendet ein eigenes Codesignal. Dadurch wird es möglich, die Daten aller Sender im gleichen Frequenzbereich zu übertragen, ohne daß die Codesignale sich stören. Diese Beschaffenheit wird Orthogonalität genannt. Mehrwegeausbreitung kann die Orthogonalität der Codesignale zerstören, so daß es dann zur Mehrfachnutzerinterferenz kommt.

Im Sender 1 wird die Intersymbolinterferenz durch Vorentzerrung eliminiert. Vorentzerrung heißt, daß die Übertragungseigenschaften des Funkkanals im Sender 1 kompensiert werden, so daß am Empfänger 4 die Einzelsignale in ihrer ursprünglichen Form empfangen werden. Dabei werden dem Funkkanal Dämpfungswerte und Phasenverzerrungen zugeordnet, welche zusammen die Übertragungseigenschaften des Funkkanals 3 widerspiegeln. Dies geschieht mittels Schätzung der Übertragungseigenschaften des Funkkanals 3 im Sender 1 mittels empfangener Referenzsignale, die vom Empfänger 4 zum Sender 1 ohne Vorentzerrung gesendet wurden.

Neben der Ausgestaltung, daß die Erfindung für einen Sender und einen Empfänger gilt, wobei über einen Rückkanal vom Empfänger zum Sender Referenzsignale gesendet werden, ist die Erfindung in vorteilhafter Weise auch dafür geeignet, daß jede Funkstation einen Sender und einen Empfänger aufweist, welche die Übertragung von Funksignalen mittels des erfindungsgemäßen Verfahrens zwischen Funkstationen erlauben. Damit werden immer Referenzsignale versendet, sowohl im Hinkanal als auch im Rückkanal, so daß die Funksignale außer den Referenzsignalen immer vorentzerrt werden.

Im Rückkanal werden die Referenzsignale empfangen, um die Übertragungseigenschaften des Funkkanals im Hinkanal zu schätzen. Es wird das Prinzip der Kanalreziprozität genutzt. Die Übertragungseigenschaften von Hin- und Rückkanal werden als gleich angenommen.

Neben den Referenzsignalen werden Nutzdatensignale wie Sprach- oder Datensignale gesendet. Der Empfänger 4 erkennt mittels üblicher Synchronisationsmethoden, wo in den empfangenen Funksignalen sich Nutzdatensignale und Referenzsignale befinden.

Diese Referenzsignale sind in ihrer ursprünglichen Form, wie sie gesendet wurden, im Sender 1 abgespeichert, so daß durch einen Vergleich der empfangenen und abgespeicherten Referenzsignale die Dämpfungswerte und Phasen des Funkkanals 3 bestimmt werden. In dieser Weise schätzt der Sender 1 den Funkkanal 3 und entzerrt die zu sendenden Funksignale entsprechend vor.

Noch vorhandene Mehrfachnutzerinterferenzen durch nicht orthogonale Codes werden hingegen im Empfänger 4 beseitigt.

Dabei erkennt der Empfänger 4 die in einer Funkzelle verwendeten Codes und verwendet bei der unten aufgeführten Berechnung zur Eliminierung der Mehrfachnutzerinterferenz nur die tatsächlich auftretenden Codes. Eine Funkzelle ist ein Gebiet, in dem Mobilstationen und eine Basisstation miteinander kommunizieren.

Die Erfindung ist sowohl für Basisstationen als auch für Mobilstationen geeignet.

Eine Leistungsregelung ist bei Mobilstationen erforderlich, damit die Mobilstationen nur die kleinste notwendige Sendeleistung abstrahlen, um eine gute Funkverbindung zu gewährleisten. Das hat zwei Vorteile: Einerseits wird die Lebensdauer der Batterie der Mobilstation erhöht, andererseits wird zum Beispiel bei Codespreizung, wo mehrere Funkstationen sich ein Frequenzband teilen, das Nebensprechen reduziert.

Das erfindungsgemäße Verfahren beziehungsweise die erfindungsgemäße Funkstation sind besonders vorteilhaft für das sogenannte ODMA-(engl. Opportunity Driven Multiple Access) System. In Figur 2 wird ein solches System gezeigt.

In Figur 2 ist eine Funkzelle dargestellt, in der mehrere Mobilstationen 5 und eine Basisstation 6 vorliegen. Die Mobilstation 5 in der Mitte ist von einem inneren Ring 7 mit benachbarten Mobilstationen umgeben. In einem zweiten Ring 8 befinden sich weitere Mobilstationen. Noch weiter außen liegt die Basisstation 6. Die Funkübertragung entspricht der, die für Figur 1 beschrieben wurde, in der Rückwärtsstrecke, dem sogenannten uplink.

Die Mobilstation 5 in der Mitte kennt die Übertragungseigenschaften, also die Dämpfungswerte, die Verzögerungszeiten und die Phasenverzerrungen, zu all ihren benachbarten Mobilstationen. Die Übertragungseigenschaften werden mittels gesendeter Referenzsignale ermittelt.

Liegt eine Übertragung von Mobilstation zu Mobilstation vor, so muß jede Mobilstation in der Lage sein, Intersymbolinterferenz und Mehrfachnutzerinterferenz zu eliminieren.

Für die vorteilhafte Verwendung der Erfindung müssen alle Mobilstationen gleich aufgebaut sein. Dabei wird die Vorentzerrung der zu sendenden Funksignale, also die Kompensation der Übertragungseigenschaften des Funkkanals 3 im Sender 1 vorgenommen, um damit die Intersymbolinterferenz zu eliminieren. Die Entzerrung der zu sendenden Funksignale wird in den Sender 1 gelegt, weil der Sender 1 nur die Übertragungseigenschaften des Funkkanals 3, über den er sendet, kennen muß, während eine Entzerrung im Empfänger 4 die Kenntnis von allen Funkkanälen, über die empfangen werden kann, erfordert. Das liegt daran, daß bei einem ODMA-System jede Mobilstation als Relaisstation arbeiten kann, so daß beispielsweise eine solche Mobilstation gleichzeitig von mehreren sendenden Mobilstationen als Relaisstation verwendet wird.

Dazu passend, daß im Sender 1 vorentzerrt wird, ist, daß die Eliminierung der Mehrfachnutzerinterferenz im Empfänger 4 stattfindet. Nur die Mehrfachnutzerinterferenzeliminierung in den Empfänger 4 zu legen, hat den Vorteil, daß dann der Empfänger nicht die Informationen über die Übertragungseigenschaften aller Funkkanäle haben muß, sondern er muß nur die Verzögerungszeiten der von ihm empfangenen Signale ermitteln.

Durch die Kombination von Vorentzerrung im Sender 1 zur Eliminierung der Intersymbolinterferenz und von der Mehrfachnutzerinterefenzbeseitigung im Empfänger 4 ermöglicht die Erfindung optimale Detektionsergebnisse.

Die Basisstation 6 ist in bezug auf die Mehrfachnutzerinterferenzeliminierung wie die Mobilstationen aufgebaut.

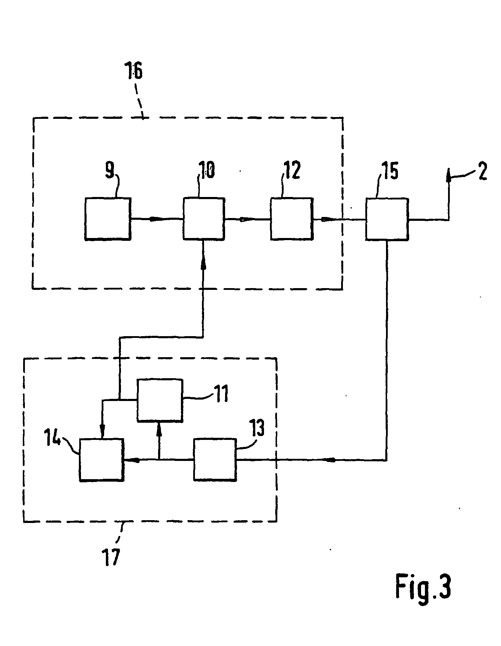

In Figur 3 ist schematisch der innere Aufbau einer erfindungsgemäßen Funkstation gezeigt. Sie weist einen Sendeteil 16 und Empfangsteil 17 auf, wobei eine Antenne 2 und ein Schalter 15 sowohl von dem Sendeteil 16 als auch von dem Empfangsteil 17 verwendet werden. Der Schalter 15 schaltet jeweils das Sendeteil 16 und das Empfangsteil 17 zur Antenne 2. Der Schalter 15 weist zum Beispiel zwei Dioden oder Transistoren auf, die jeweils den Sendeteil 16 oder den Empfangsteil 17 zuschalten.

Der Sendeteil 16 weist einen Modulator 9, ein Entzerrerfilter 10 und eine Sendeeinrichtung 12 auf. Der Empfangsteil 17 weist eine Empfangseinrichtung 13, einen Kanalschätzer 11 und eine Mehrfachnutzerdetektion 14 auf.

Der Modulator 9 ist über einen Datenausgang mit einem ersten Dateneingang des Entzerrerfilters 10 verbunden. Der Kanalschätzer 11 ist über einen Datenausgang an einen zweiten Dateneingang des Entzerrerfilters 10 angeschlossen. Mit einem Dateneingang des Kanalschätzers 11 ist die Empfangseinrichtung 13 über ihren ersten Datenausgang verbunden. Weiterhin ist die Mehrfachnutzerdetektion 14 über einen ersten Dateneingang mit dem Datenausgang des Kanalschätzers 11 verbunden. Über den Datenausgang der Empfangseinrichtung 13 werden die empfangenen Referenzsignale an den Kanalschätzer 11 übertragen. An den Datenausgang der Empfangsvorrichtung 13 ist auch die Mehrfachnutzerdetektion 14 über einen zweiten Dateneingang verbunden. Von einem Datenausgang des Entzerrerfilters 10 führt eine Leitung zu einem Dateneingang der Sendeeinrichtung 12. Die Sendeeinrichtung 12 ist über den Schalter 15 an die Antenne 2 angeschlossen.

Die Antenne 2 ist weiterhin über den Schalter 15 an die Empfangseinrichtung 13 angeschlossen. Sende- und Empfangsteil jeder Mobilstation sind derart aufgebaut.

Die digitalen Nutzdatensignale werden mittels des Codes der sendenden Funkstation im Modulator 9 gespreizt. Die gespreizten Nutzdatensignale werden dann im Entzerrerfilter 10 vorentzerrt. Diese Vorentzerrung geschieht aufgrund der Schätzung der Übertragungseigenschaften des Funkkanals, die im Kanalschätzer 11 vorgenommen wurde. Der Kanalschätzer 11 schätzt durch Vergleich von empfangenen Referenzsignalen mit in ihrer ursprünglichen Form abgespeicherten Referenzsignalen die Übertragungseigenschaften des Funkkanals. Die Referenzsignale, wurden von der Funkstation erhalten, zu der nun gesendet wird. Der Entzerrerfilter 10 und der Kanalschätzer 11 sind auf einem digitalen Signalprozessor implementiert.

Die vorentzerrten und gespreizten Nutzdatensignale gelangen dann in die Sendeeinrichtung 12. Dort werden den Nutzdatensignalen die Referenzsignale hinzugefügt. Dies ist notwendig, damit die empfangende Funkstation die Übertragungseigenschaften des Funkkanals schätzen kann. Deshalb werden die Referenzsignale nicht vorentzerrt. Darüber hinaus filtert und verstärkt die Sendeeinrichtung 12 die zu sendenden Signale und setzt sie in einen Sendefrequenzbereich um. Über die Antenne 2 werden die Funksignale abgestrahlt.

Die Funksignale gelangen über den Funkkanal zum Empfangsteil 17, wobei sie mit der Antenne 2 empfangen werden. Von der Antenne 2 kommen die empfangenen Funksignale zur Empfangseinrichtung 13. Die Empfangseinrichtung 13 filtert die empfangenen Signale, um unerwünscht empfangene Signale zu eliminieren, sie verstärkt die empfangenen Funksignale und setzt sie in eine niedrigere Zwischenfrequenz um. Die Empfangseinrichtung 13 entnimmt den empfangenen Funksignalen die Referenzsignale und übergibt sie dem Kanalschätzer 11, der sich im Sendeteil 17 der empfangenden Funkstation befindet. Darüber hinaus ermittelt die Empfangseinrichtung 13 bei der Zeitsynchronisation die unterschiedlichen Verzögerungszeiten der empfangenen Funksignale aufgrund der Mehrwegeausbreitung und der Vorentzerrung, da auch das Entzerrerfilter 10 eine Verzögerungszeit dem zu sendenden Signal hinzufügt.

Die Kanalschätzungen als auch die empfangenen Signale werden schließlich der Mehrfachnutzerdetektion 14 übergeben.

Die Mehrfachnutzerdetektion 14 entspreizt die Nutzdatensignale mittels der richtigen Codes. Dafür sind der Mehrfachnutzerdetektion 14 alle notwendigen Codes bekannt, mit denen die in einer Funkzelle codegespreizten Signale entspreizt werden können. Kommen neue Codes hinzu oder werden bisher verwendete Codes nicht mehr verwendet, dann ändert die Mehrfachnutzerdetektion die Codes entsprechend. Bei der Entspreizung wird ein Zero-Forcing-Algorithmus verwendet. Die Mehrfachnutzerdetektion 14 ist auf einem digitalen Signalprozessor implementiert.

Im folgenden wird anhand von einigen Gleichungen ein Ausführungsbeispiel der Erfindung dargestellt. Die Beschreibung erfolgt zeitdiskret. CDMA bedeutet, daß die oben beschriebene Codespreizung angewendet wird. Die zu übertragenden digitalen Datenblöcke der $K$ verschiedenen Nutzer, z. B. Mobilstationen, seien mit $\underline{d}^{(k)} = (d^{(k)}1,...,d^{(k)}_M)$ bezeichnet, wobei $d^{(k)}_i = \pm 1$, $k = 1,...,K$ und M=Anzahl Bits pro Datenblock. Diese Blöcke seien mit den CDMA-Codes $\underline{c}^{(k)} = (c^{(k)}_{1,...,}c^{(k)}_Q)$, $k = 1,...,K$ der Länge $Q$ kodiert zu:

$$\underline{s}^{(k)T} = (c^{(k)}_1 \cdot d^{(k)}_1,...,c^{(k)}_Q \cdot d^{(k)}_1,...,c^{(k)}_1 \cdot d^{(k)}_M,...,c^{(k)}_Q \cdot d^{(k)}_M)^T$$
$$= C^{(k)} \cdot \underline{d}^{(k)T}$$

$$C^{(k)} = \begin{pmatrix} \underline{c}^{(k)T} & & \\ & \ddots & \\ & & \underline{c}^{(k)T} \end{pmatrix}$$
$$\underbrace{\phantom{xxxxxxxxxxx}}_{M \cdot Q \times M}$$

$\underline{s}^{(k)T}$ = transponierter Zeilen-Vektor $\underline{s}^{(k)}$

Die Impulsantworten $\underline{h}^{(k)} = (h^{(k)}1,...,h^{(k)}_{Wk})$ der zu verwendenden Funkkanäle der Länge $W_k$ seien den jeweiligen Sendern durch die oben beschriebene Kanalschätzung bekannt. Seien $\underline{p}^{(k)} = (p^{(k)}1,...,p^{(k)}_{L_k})$ die Impulsantworten von Entzerrer-Filtern der Länge $L_k$ in den $K$ Sendern. Die $K$ Sender der verschiedenen Nutzer senden dann die Funksignale

$$\underline{s}'^{(k)} = \underline{s}^{(k)} * \underline{p}^{(k)}$$

Durch Mehrwegeübertragung und additives Rauschen $\underline{n}^{(k)}$ wird daraus am jeweiligen Empfänger:

$$\underline{r}^{(k)} = \underline{s}'^{(k)} * \underline{h}^{(k)} + \underline{n}^{(k)} \approx \underline{s}^{(k)} + \underline{n}^{(k)}$$

In realen Systemen treffen diese Funksignale aufgrund verschiedener Laufzeiten der Sendesignale i.a. mit unterschiedlichen Verzögerungen am Empfänger ein (Mehrwegeausbreitung und Vorentzerrung). $\tau_k$ ist die Verzögerungszeit des k-ten Funkkanals. Die Verzögerungen können auch Bruchteile einer Abtastperiode sein. Die Abtastwerte im Empfänger sind dann von der Form:

$$\underline{r}^{(k)^T}(\tau_k) \approx \underline{s}^{(k)^T}(\tau_k) + \underline{n}^{(k)^T}$$

$$\underline{s}^{(k)^T}(\tau_k) = C^{(k)}(\tau_k) \cdot \underline{d}^{(k)^T}$$

$$C^{(k)}(\tau_k) = \begin{pmatrix} c^{(k)}{}_1(\tau_k) & 0 & \cdots & 0 \\ \vdots & \vdots & & \\ c^{(k)}{}_Q(\tau_k) & 0 & & \vdots \\ \vdots & c^{(k)}{}_1(\tau_k) & & \\ c^{(k)}{}_{Q+\Delta_{max}-1}(\tau_k) & \vdots & & 0 \\ 0 & c^{(k)}{}_{Q+\Delta_{max}-1}(\tau_k) & & c^{(k)}{}_1(\tau_k) \\ \vdots & \vdots & & \vdots \\ 0 & 0 & \cdots & c^{(k)}{}_{Q+\Delta_{max}-1}(\tau_k) \end{pmatrix}$$

$$\underbrace{\qquad\qquad\qquad\qquad}_{(Q \cdot M + \Delta_{max} - 1) \times M}$$

$$c^{(k)}{}_j(\tau_k) = c^{(k)}(j \cdot T_s - \tau_k)$$

$c^{(k)}(t)=$ zeitkontinuierliches Signal zum zeitdiskreten Signal $\underline{c}^{(k)}$ der Abtastperiode $T_s$ nach Filterung durch Empfangseinrichtung

$$\Delta_{max} = \max_k$$

(Verzögerung durch k-ten Sender, k-ten Funkkanal und k-te Empfangseinrichtung)

Insgesamt erhält der Empfänger das Signal

$$\underline{r} = \sum_{k=1}^{K} \underline{r}^{(k)}(\tau_k) \approx \underline{s} + \underline{n}$$

mit

$$\underline{s} = \sum_{k=1}^{K} \underline{s}^{(k)}(\tau_k)$$

$$\underline{n} = \sum_{k=1}^{K} \underline{n}^{(k)}$$

Der Empfänger demoduliert nun dieses Signal durch einen Zero Forcing Block Linear Estimator und liefert als Schätzung $\hat{\underline{d}}$ der übertragenen Daten $\underline{d} = (\underline{d}^{(1)},...,\underline{d}^{(K)})$:

$$\hat{\underline{d}}^T = R \cdot \underline{r}^T$$

$$R = (C^H \cdot C)^{-1} \cdot C^H$$

$$C = \underbrace{\left( C^{(1)}(\tau_1) \quad ... \quad C^{(K)}(\tau_K) \right)}_{(Q \cdot M + \Delta_{max} - 1) \times K \cdot M}$$

$C^H$ bezeichnet die konjugiert komplexe transponierte Matrix $C$.

Im Gegensatz zu anderen Mehrfachnutzer-Verfahren, ist die Empfangsmatrix $R$ höchstens bei Änderung der verwendeten CDMA-Codes zu ändern und nicht bei Änderung der Übertragungseigenschaften des Funkkanals.

**Patentansprüche**

1. Verfahren zur Übertragung von Funksignalen zwischen mehreren Funkstationen über Funkkanäle (3) mittels Codespreizung, wobei ein Frequenzbereich zur Übertragung von Funksignalen zwischen den Funkstationen verwendet wird, wobei die codegespreizten Funksignale unter Berücksichtigung der Übertragungseigenschaften des jeweiligen Funkkanals (3) in der sendenden Funkstation (1) vorentzerrt werden, dass Querbeeinflussungen der empfangenen gespreizten Funksignale untereinander in einer empfangende Funkstation (4) berücksichtigt werden, und dass in der empfangenen Funkstation (4) die unterschiedlichen Verzögerungszeiten der empfangenen Funksignale aufgrund der Vorentzerrung und der Mehrwegeausbreitung ermittelt werden und bei der Entspreizung der empfangenen Funksignale berücksichtigt werden,
und dass die Funksignale Referenz- und Nutzdatensignale aufweisen, **dadurch gekennzeichnet, dass** die Referenzsignale ohne Vorentzerrung gesendet werden, und dass aus den empfangenen Referenzsignalen in der empfangenden Funkstation (4) die Übertragungseigenschaften des jeweiligen Funkkanals (3) bestimmt werden, um damit die zu sendenden Funksignale vorzuentzerren,
wobei die Funksignale außer den Referenzsignalen immer vorentzerrt werden.

2. Verfahren nach Anspruch 1, **dadurch gekennzeichnet, dass** die unterschiedlichen Verzögerungszeiten der empfangenen Funksignale aufgrund der Vorentzerrung und der Mehrwegeausbreitung in der empfangenden Funkstation (4) mit Hilfe von Referenzsignalen in den empfangenen Funksignalen erkannt werden.

3. System von Funkstationen, wobei jede Funkstation ausgestaltet ist, Funksignale über Funkkanäle (3) mittels Codespreizung zu senden und empfangen, wobei die empfangende Funkstation mit mehreren sendenden Funkstationen über Funkkanäle (3) verbunden ist, wobei die sendenden Funkstationen eine Vorentzerrung der zu sendenden gespreizten Funksignale aufgrund der Übertragungseigenschaften des jeweiligen Funkkanals (3) vornehmen, dass die empfangende Funkstation unter Berücksichtigung der Codes der empfangenen Funksignale diese entspreizt und Querbeeinflussungen der empfangenen Funksignale berücksichtigt, und dass die empfangende Funkstation (4) die unterschiedlichen Verzögerungszeiten der empfangenen Funksignale ermittelt und die empfangenen Funksignale entsprechend entspreizt,

und dass die Funksignale Referenz- und Nutzdatensignale aufweisen **dadurch gekennzeichnet, dass** die Referenzsignale ohne Vorentzerrung gesendet werden, und dass aus den empfangenen Referenzsignalen in der empfangenden Funkstation (4) die Übertragungseigenschaften des jeweiligen Funkkanals (3) bestimmt werden, um damit die zu sendenden Funksignale vorznentzerren.

wobei die Funksignale außer den Referenzsignalen immer vorentzerrt werden.

**4.** System nach Anspruch 3, **dadurch gekennzeichnet, dass** eine erste Funkstation zu mindestens einer weiteren Funkstation Funksignale sendet und die empfangene Funkstation oder die empfangenden Funkstationen die empfangenen Funksignale an mindestens eine weitere Funkstation weitersenden.

**5.** System nach Anspruch 3 oder 4, **dadurch gekennzeichnet, dass** die empfangende Funkstation (4) die unterschiedlichen Verzögerungszeiten der empfangenen Funksignale aufgrund der Mehrwegeausbreitung durch Referenzsignale in den empfangenen Funksignalen berechnet.

## Claims

**1.** Method for transmitting radio signals between a plurality of radio stations via radio channels (3) using code spreading, wherein a frequency range is used for transmitting radio signals between the radio stations, wherein the code-spread radio signals are predistorted taking account of the transmission properties of the respective radio channel (3) in the sending radio station (1), wherein lateral influences among the received spread radio signals are taken into account in a receiving radio station (4), and wherein the receiving radio station (4) ascertains the various delay times of the received radio signals on the basis of the predistortion and the multipath propagation and takes them into account when despreading the received radio signals, and wherein the radio signals have reference and useful data signals, **characterized in that** the reference signals are transmitted without predistortion, and **in that** the received reference signals are used in the receiving radio station (4) to determine the transmission properties of the respective radio channel (3) in order to use them to predistort the radio signals which are to be sent, wherein the radio signals other than the reference signals are always predistorted.

**2.** Method according to Claim 1, **characterized in that** the various delay times of the received radio signals on the basis of the predistortion and the multipath propagation are recognised in the receiving radio station (4) with the aid of reference signals in the received radio signals.

**3.** System of radio stations, wherein each radio station is designed to send and receive radio signals via radio channels (3) using code spreading, wherein the receiving radio station is connected to a plurality of sending radio stations via radio channels (3), wherein the sending radio stations perform predistortion of the spread radio signals which are to be sent on the basis of the transmission properties of the respective radio channel (3), wherein the receiving radio station takes account of the codes in the received radio signals and despreads said radio signals and takes account of lateral influences in the received radio signals, and wherein the receiving radio station (4) ascertains the various delay times of the received radio signals and despreads the received radio signals accordingly, and wherein the radio signals have reference and useful data signals, **characterized in that** the reference signals are sent without predistortion, and **in that** the received reference signals are used in the receiving radio station (4) to determine the transmission properties of the respective radio channel (3) in order to use them to predistort the radio signals which are to be sent, wherein the radio signals other than the reference signals are always predistorted.

**4.** System according to Claim 3, **characterized in that** a first radio station sends radio signals to at least one further radio station, and the receiving radio station or the receiving radio stations forward the received radio signals to at least one further radio station.

**5.** System according to Claim 3 or 4, **characterized in that** the receiving radio station (4) calculates the various delay times of the received radio signals on the basis of the multipath propagation by means of reference signals in the received radio signals.

# EP 1 107 465 B1

**Revendications**

1. Procédé pour la transmission de signaux radio entre plusieurs stations radio par l'intermédiaire de canaux radio (3) au moyen de l'étalement de codes, dans lequel on utilise une plage de fréquences pour la transmission de signaux radio entre les stations radio, dans lequel on préégalise les signaux radio à code étalé en tenant compte des caractéristiques de transmission du canal radio correspondant (3) dans la station radio émettrice (1), de manière à tenir compte des influences mutuelles des signaux radio étalés entre eux reçus dans une station radio réceptrice (4), et à déterminer dans la station radio réceptrice (4), les différents temps de retard des signaux radio reçus dus à la prééqualisation et à la propagation sur plusieurs chemins, et à en tenir compte lors de l'opération annulant l'étalement des signaux radio reçus,
   et à ce que les signaux radio comportent des signaux de référence et de données utiles, **caractérisé en ce que** les signaux de référence sont émis sans prééqualisation, et qu'à partir des signaux de référence reçus dans la station radio réceptrice (4), on détermine les caractéristiques de transmission du canal radio correspondant (3) de manière à prééqualiser les signaux radio à émettre,
   dans lequel, à l'exception des signaux de référence, les signaux radio sont toujours prééqualisés.

2. Procédé selon la revendication 1, **caractérisé en ce que** les différents temps de retard des signaux radio reçus dus à la prééqualisation et à la propagation sur plusieurs chemins dans la station radio réceptrice (4) sont identifiés à l'aide de signaux de référence contenus dans les signaux radio reçus.

3. Système de stations radio, dans lequel chaque station radio est équipée de signaux radio par l'intermédiaire de canaux radio (3) au moyen de l'étalement de codes pour l'émission et la réception, dans lequel la station radio réceptrice est reliée à plusieurs stations radio émettrices par l'intermédiaire de canaux radio (3), dans lequel les stations radio émettrices assurent une prééqualisation des signaux radio étalés à émettre en tenant compte des caractéristiques de transmission du canal radio correspondant (3), en ce que la station radio réceptrice annule l'étalement des signaux radio reçus en respectant leur code, et tient compte des influences mutuelles des signaux radio reçus, et en ce que la station radio réceptrice (4) détermine les différents temps de retard des signaux radio reçus et annule en rapport l'étalement des signaux radio reçus,
   et à ce que les signaux radio comportent des signaux de référence et de données utiles, **caractérisé en ce que** les signaux de référence sont émis sans prééqualisation, et qu'à partir des signaux de référence reçus dans la station radio réceptrice (4), on détermine les caractéristiques de transmission du canal radio correspondant (3) de manière à prééqualiser les signaux radio à émettre,
   dans lequel, à l'exception des signaux de référence, les signaux radio sont toujours prééqualisés.

4. Système selon la revendication 3, **caractérisé en ce qu'**une première station radio émet des signaux radio à au moins une autre station radio et que la station radio réceptrice ou les stations radio réceptrices renvoient les signaux radio reçus vers au moins une autre station radio.

5. Système selon la revendication 3 ou 4, **caractérisé en ce que** la station radio réceptrice (4) calcule les différents temps de retard des signaux radio reçus dus à la propagation sur plusieurs chemins en tenant compte de signaux de référence contenus dans les signaux radio reçus.

9

Fig.1

3

15

1

4

5

5

5

5

5

5

6

5

5

5

5

7

8

5

5

Fig.2

Fig.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. Esmailzadeh ; M. Nakagawa.** Pre-Rake Diversity Combination for Direct Sequence Spread Spectrum Mobile Communications Systems. *IEICE Trans. Comm.,* 1008-1015
- **Won Mee et al.** Joint Transmitter-Receiver Optimization in Synchronous Multiuser Communications over Multipath Channels. *IEEE Trans. On Communications,* 01. Februar 1998, vol. 46 (2), 269-278
- **Jaeyoung Kwak et al.** Blind Adaptive Space-Time Receiving and Transmitting Diversities for Multiuser DS-CDMA Systems. *Military Communications Conf. Proc,* 1999, 924-928
- **G J R Povey.** Time Division Duplex - Code Division Multiple Access for Mobile Multimedia Services. *Proc. Of the 8th IEEE Intl. Symposium Personal, Indoor and Mobile Radio Communications,* 1997, 1034-1037
- **R. Esmailzadeh et al.** Prerake Diversity Combining in Time-Division Duplex CDMA Mobile Communications. *IEEE TRANSACTIONS on VEHICULAR TECHNOLOGY,* 01. Mai 1999, vol. 48 (3), 795-801